# EUROPÄISCHE PATENTANMELDUNG

(11) **EP 4 718 677 A1**
(43) Veröffentlichungstag der Anmeldung: **01.04.2026**
(21) Anmeldenummer: 25201889.0
(22) Anmeldetag: 12.09.2025
(51) Int. Cl.: H02J 7/40, H01M 10/42, H01M 50/247, H02J 7/60, H02J 7/80

(54) **AKKUMULATOR SOWIE VERFAHREN ZUM BETREIBEN EINES AKKUMULATORS**

(30) Priorität: 27.09.2024 DE 102024128099
(71) Anmelder: Einhell Germany AG, 94405 Landau / Isar (DE)
(72) Erfinder: Thannhuber, Markus, 94405 Landau (DE); Szekacs, Endre, 94363 Oberschneiding (DE); Fech, Daniel, 86647 Buttenwiesen (DE)
(74) Vertreter: Canzler & Bergmeier Patentanwälte Partnerschaft mbB

(57) **Zusammenfassung**

Die vorliegende Erfindung betrifft einen Akkumulator (1), insbesondere loT-Akkumulator, mit wenigstens einer Akkumulatorzelle (2) zur Aufnahme, Speicherung und Abgabe von Energie, einer Energieschnittstelle (3) zur Verbindung des Akkumulators (1) mit einem Endgerät und/oder einer externen Energiequelle, und einer Steuerung (4) zum Steuern der wenigstens einen Akkumulatorzelle (2) und/oder der Energieschnittstelle (3). Außerdem betrifft die Erfindung ein Verfahren zum Betreiben eines Akkumulators (1). Es wird vorgeschlagen, dass der Akkumulator (1) eine loT-Steuereinheit (5) umfasst, wobei die loT-Steuereinheit (5) ausgebildet ist, Steuerbefehle für die Steuerung (4) und/oder Statusinformationen des Akkumulators (1) zu erzeugen.

## Beschreibung

Die vorliegende Erfindung betrifft einen Akkumulator, insbesondere IoT-Ackumulator, mit wenigstens einer Akkumulatorzelle zur Aufnahme, Speicherung und Abgabe von Energie, einer Energieschnittstelle zur Verbindung des Akkumulators mit einem Endgerät und/oder einer externen Energiequelle, und einer Steuerung zum Steuern der wenigstens einen Akkumulatorzelle und/oder der Energieschnittstelle. Außerdem betrifft die Erfindung ein Verfahren zum Betreiben eines Akkumulators.

Gattungsgemäße Akkumulatoren sind seit langem bekannt. Sie dienen beispielsweise der Energieversorgung von Elektrowerkzeugen. Dabei werden meist mehrere Akkumulatoren im Wechsel verwendet, um Unterbrechungen der Arbeit mit dem Elektrowerkzeug zu vermeiden. Die in den letzten Jahrzehnten gestiegenen Kapazitäten erlauben es, auch größere Elektrogeräte, wie beispielsweise Rasenmäher, mit Akkumulatoren zu betreiben. Meist verwenden Hersteller von Elektrogeräten Akkumulatorsysteme mit entsprechenden Ladegeräten und Akkumulatoren, deren Energieschnittstelle auf bestimmte Weise ausgeführt ist, so dass Akkumulatoren eines Herstellers in der Regel nicht mit den Elektrogeräten eines anderen Herstellers kompatibel sind. Der Kauf eines Akkumulatorsystems trägt also stark zur Kundenbindung eines Elektrogeräteherstellers bei.

Es ist daher wünschenswert, Akkumulatoren mit zusätzlichen Funktionen als Kaufargument auszustatten, womit den Akkumulatoren selbst, aber eventuell auch den damit betriebenen Endgeräten ein Marktvorteil verliehen wird. Es ist denkbar, dass den Akkumulatoren die Fähigkeit verliehen wird, sich individuell an das angeschlossene Endgerät oder Ladegerät anzupassen. Dies geschieht bei bekannten Akkumulatoren automatisch, ohne dass ein Benutzer des Akkumulators hierauf Einfluss nehmen könnte. Außerdem ist hierfür in der Regel ein "intelligentes" Endgerät oder Ladegerät notwendig, das komplexe Daten mit dem Akkumulator austauschen kann. Es ist daher wünschenswert, dass ein Akkumulator auch in passiver Weise an ein Endgerät oder Ladegerät anpassbar ist, ohne dass das Endgerät oder Ladegerät die Fähigkeit zum Austausch komplexer Daten aufweist.

Aufgabe der vorliegenden Erfindung ist es daher, bekannte Akkumulatoren im Hinblick auf die genannten Nachteile zu verbessern.

Die Aufgabe wird gelöst durch einen Akkumulator und ein Verfahren zum Betreiben eines Akkumulators mit den Merkmalen der unabhängigen Patentansprüche.

Der erfindungsgemäße Akkumulator, der insbesondere als IoT-Akkumulator ausgebildet ist, umfasst vorzugsweise wenigstens eine Akkumulatorzelle zur Aufnahme, Speicherung und Abgabe von Energie. Die Akkumulatorzelle stellt insbesondere die Grundfunktion des Akkumulators, das Betreiben von angeschlossenen Endgeräten, bereit. Der Akkumulator kann je nach Energiekapazität unterschiedlich viele Akkumulatorzellen aufweisen. Der Akkumulator umfasst beispielsweise wenigstens zwei Akkumulatorzellen. Die Akkumulatorzellen sind insbesondere durch ein an den Akkumulator angeschlossenes Ladegerät wiederaufladbar.

Darüber hinaus umfasst der Akkumulator vorzugsweise eine Energieschnittstelle zur Verbindung des Akkumulators mit einem Endgerät und/oder einer externen Energiequelle. Die Energieschnittstelle stellt insbesondere eine Verbindung zwischen der wenigstens einen Akkumulatorzelle und einem angeschlossenen Ladegerät oder einem angeschlossenen Endgerät bereit. Außerdem umfasst der Akkumulator eine Steuerung zum Steuern der wenigstens einen Akkumulatorzelle und/oder der Energieschnittstelle. Die Steuerung verwaltet beispielsweise die Lade- und Entladevorgänge und überwacht die Betriebsparameter des Akkumulators.

Es wird vorgeschlagen, dass der Akkumulator eine IoT-Steuereinheit umfasst, wobei die IoT-Steuereinheit ausgebildet ist, Steuerbefehle für die Steuerung und/oder Statusinformationen des Akkumulators zu erzeugen.

Die IoT-Steuereinheit ermöglicht unter anderem eine umfassende Benutzerinteraktion, wodurch die Kontrolle und Überwachung des Akkumulators und eventuell des angeschlossenen Endgeräts oder Ladegeräts signifikant erweitert wird. Benutzer können über die IoT-Steuereinheit beispielsweise direkt Einfluss auf die Steuerungsparameter des Akkumulators nehmen. Dies kann beispielsweise die Festlegung von Ladezeitfenstern, die Priorisierung bestimmter Verbraucher oder die Anpassung von Leistungsprofilen umfassen.

Die von der IoT-Steuereinheit generierten Statusinformationen können einem Benutzer auf vielfältige Weise zugänglich gemacht werden. Denkbar ist eine Übertragung der Statusinformationen beispielsweise an ein Unterhaltungselektronikgerät des Benutzers. Auf diesem Gerät kann der Benutzer beispielsweise den aktuellen Ladezustand, die Leistungsabgabe und/oder die Temperatur des Akkumulators abrufen. Benachrichtigungssysteme könnten den Benutzer über kritische Ereignisse wie niedrige Ladezustände oder ungewöhnliche Betriebszustände informieren. Periodische Berichte können beispielsweise Langzeittrends in der Nutzung und Effizienz des Akkumulators aufzeigen. Umgekehrt kann ein Benutzer beispielsweise die Leistungsparameter des Akkumulators durch ein Unterhaltungselektronikgerät beeinflussen und so insbesondere auch Endgeräte ohne eigene Kommunikationsfähigkeiten zumindest teilweise passiv durch den Akkumulator steuern.

Die erzeugten Statusinformationen können zusätzlich oder alternativ in einem Speicher des Akkumulators gespeichert werden, um Langzeitanalysen zu ermöglichen. Dies würde es erlauben, Trends in der Akkumulatornutzung zu erkennen und die Steuerungsparameter entsprechend anzupassen. Der Akkumulator kann beispielsweise basierend auf historischen Daten und einem aktuellen Zustand Vorhersagen über seinen zukünftigen Zustand treffen und diese Informationen insbesondere mit verbundenen Systemen teilen, um eine proaktive Anpassung der Energienutzung zu ermöglichen.

Kommunikationsfähigkeiten der IoT-Steuereinheit ermöglichen es dem Akkumulator beispielsweise als integraler Bestandteil eines vernetzten Ökosystems zu fungieren. Der Akkumulator lässt sich auf diese Weise in das sich immer weiter entwickelnde sogenannte Internet der Dinge (engl. "internet of things, IoT") eingliedern. Der Akkumulator kann beispielsweise mit anderen Geräten im Haushalt oder in der industriellen Umgebung insbesondere bidirektional Daten austauschen.

Auch ist es von Vorteil, wenn der Akkumulator eine Erfassungseinheit zum Erfassen von Akkumulatorparametern umfasst. Die durch die Erfassungseinheit erfassten Akkumulatorparameter eignen sich insbesondere als Basis für Steuerungsentscheidungen und Zustandsanalysen.

Die Erfassungseinheit kann insbesondere verschiedene Sensoren umfassen, die spezifische Akkumulatorparameter messen. Hierzu zählen beispielsweise Spannungssensoren zur Überwachung der Zellspannung der wenigstens einen Akkumulatorzelle und/oder zur Überwachung einer übertragenen Spannung, Stromsensoren zur Erfassung von Lade- und Entladeströmen, und/oder Temperatursensoren zur Ermittlung der Temperatur des Akkumulators. Zusätzlich können eventuell Sensoren zur Messung des internen Widerstands oder des Widerstands an der Energieschnittstelle vorgesehen sein.

Vorteilhaft ist es, wenn die IoT-Steuereinheit mit der Erfassungseinheit verbunden und ausgebildet ist, die Steuerbefehle für die Steuerung und/oder Statusinformationen des Akkumulators in Abhängigkeit zumindest eines Ackumulatorparameters zu erzeugen. Die IoT-Steuereinheit kann hierdurch die von der Erfassungseinheit gelieferten Akkumulatorparameter für eine kontextsensitive Steuerung des Akkumulators verwenden.

Hierdurch lassen sich insbesondere Steuerbefehle für die passive Steuerung von Endgeräten erzeugen. Das angeschlossene Endgerät, insbesondere ohne Kommunikationsmöglichkeiten, lässt sich zumindest teilweise durch Ackumulatorparameter charakterisieren. So lässt sich eine vom Endgerät benötigte Mindestspannung als diejenige identifizieren, ab der ein Stromfluss stattfindet. Die vom Endgerät gezogene Stromstärke und seine Leistungsaufnahme lassen beispielsweise Rückschlüsse auf die Art des Endgeräts zu. Die Erzeugung von Statusinformationen basierend auf den erfassten Akkumulatorparametern ermöglicht eine präzise und aktuelle Zustandsbeschreibung des Akkumulators.

Die erfassten Akkuparameter können beispielsweise auch für interne Sicherheitsfunktionen des Akkumulators verwendet werden. Beispielsweise kann bei Erkennung einer erhöhten Temperatur die Laderate beim Laden des Ackumulators automatisch reduziert werden, um einer thermischen Überlastung vorzubeugen.

Besonders vorteilhaft ist es, wenn die Akkumulatorparameter und/oder die Statusinformationen eine Anzahl von Ein- und/oder Ausschaltvorgängen, eine Anzahl und/oder Art von Energieübertragungsvorgängen, einen Ladestand der wenigstens einen Akkumulatorzelle und/oder eine Temperatur des Akkumulators umfassen. Insbesondere diese Daten können Grundlagen für Steuerbefehle der IoT-Steuereinheit bilden. Auch können diese Daten insbesondere wichtige Informationen für einen Benutzer des Akkumulators enthalten.

Die Anzahl der Ein- und Ausschaltvorgänge liefert wichtige Informationen über die Nutzungshäufigkeit und -intensität des Akkumulators. Diese Daten erlauben beispielsweise Rückschlüsse auf potenzielle Verschleißerscheinungen am Akkumulator selbst oder an einem angeschlossenen Endgerät. Außerdem kann hierdurch beispielsweise ein Benutzungsverhalten, insbesondere mit einem bestimmten Endgerät, ermittelt werden.

Zu der Anzahl und Art von Energieübertragungsvorgängen zählen beispielsweise Lade- und Entladevorgänge sowie möglicherweise auftretende Lastspitzen. Diese Informationen können beispielsweise zur Optimierung von Ladestrategien herangezogen werden. Insbesondere kann die IoT-Steuereinheit, vorzugsweise durch Eingriff des Benutzers, in Abhängigkeit von der regelmäßigen Dauer von Ladevorgängen, eine angepasste Ladekurve implementieren, um die Lebensdauer der Akkumulatorzellen zu verlängern. Beispielsweise kann bei häufigen längeren Ladevorgängen, beispielsweise über Nacht, die Ladeleistung verringert werden.

Durch die Anzahl und Art von Energieübertragungsvorgängen können, wie oben bereits beschrieben, ebenfalls indirekt Parameter eines angeschlossenen Endgeräts bestimmt und eventuell zur Steuerung des Endgeräts verwendet werden.

Eine präzise Erfassung des Ladestands ermöglicht eine zuverlässige Vorhersage der verfügbaren Energiemenge und unterstützt die Planung von Lade- und Entladezyklen. Diese Information ist womöglich die wichtigste Information für einen Benutzer, da hierdurch die Einsatzmöglichkeiten des Akkumulators für den Benutzer am deutlichsten beeinflusst werden.

Die Temperatur des Akkumulators ist ein entscheidender Faktor für dessen Leistungsfähigkeit und Lebensdauer. Die Temperaturüberwachung trägt wesentlich zur Sicherheit und Effizienz des Akkumulators bei.

Vorteilhaft ist es, wenn die durch die IoT-Steuereinheit erzeugbaren Steuerbefehle einen Zeitpunkt einer Energieübertragung, einen Zeitraum einer Energieübertragung, ein Intervall einer Energieübertragung, einen Betrag einer übertragenen Spannung und/oder einen Betrag einer übertragenen Stromstärke betreffen.

Die Steuerung des Zeitpunkts einer Energieübertragung ermöglicht beispielsweise Ladevorgänge optimal an externe Faktoren anzupassen. Dies könnte beispielsweise die Synchronisation mit Zeiten günstiger Stromtarife oder die Abstimmung auf die Verfügbarkeit erneuerbarer Energiequellen umfassen. Bei der passiven Steuerung von Endgeräten kann ein Benutzer beispielsweise festlegen, wann ein Endgerät eingeschaltet werden soll.

Die Festlegung eines Zeitraums für die Energieübertragung erlaubt eine genaue Planung und Kontrolle der Nutzungsdauer. Bei der passiven Steuerung von Endgeräten kann der Benutzer hierdurch festlegen, wie lange ein angeschlossenes Endgerät aktiviert bleiben soll.

Die Steuerung von Intervallen der Energieübertragung ermöglicht eine feingranulare Kontrolle über den Energiefluss. Eventuell können angeschlossene Endgeräte hierdurch zyklisch, insbesondere alternierend, betrieben werden, auch wenn das Endgerät diese Funktion eigentlich nicht umfasst. Eine angeschlossene Lampe kann hierdurch beispielsweise in ein blinkendes Warnlicht umfunktioniert werden.

Die Regelung des Betrags der übertragenen Spannung ist insbesondere wichtig für die angeschlossenen Endgeräte. Eventuell lässt sich durch eine reduzierte Spannung ein Energiesparmodus realisieren, ohne dass das Endgerät einen derartigen Modus selbst unterstützt.

Die Steuerung des Betrags der übertragenen Stromstärke erlaubt eine genaue Kontrolle über die Leistungsabgabe und -aufnahme des Akkumulators. Insbesondere kann hierdurch die Leistung von angeschlossenen Endgeräten beeinflusst werden. Eventuell ist es vom Benutzer gewünscht, angeschlossene Endgeräte mit geringerer Leistung zu betreiben, um beispielsweise Beschädigungen zu vermeiden oder die Sicherheit im Umgang mit dem Endgerät zu erhöhen.

Durch die kombinierte Steuerung dieser Parameter kann die IoT-Steuereinheit komplexe Lade- und Entladeprofile umsetzen. Falls der Akkumulator beispielsweise mit einer Lampe betrieben wird, kann ein Nutzer festlegen, dass die Lampe zu einem bestimmten Zeitpunkt durch Energieübertragung aus dem Akkumulator eingeschaltet wird. Die Lampe kann für eine bestimmte Dauer leuchten, beispielsweise über Nacht. Durch Kontrolle der Spannung und der Stromstärke kann eventuell eine Intensität der Lichtabgabe bestimmt werden.

Falls der Akkumulator beispielsweise mit einer Pumpe als Endgerät betrieben wird, kann eine Einschaltzeit, Einschaltdauer und/oder Pumpleistung bestimmt werden. Durch eine Erfassung von Akkuparametern kann bei einer plötzlichen erhöhten Leistungsabgabe des Akkumulators eventuell eine Fehlfunktion der Pumpe, wie eine Verstopfung, erkannt werden. Dies kann dann durch die IoT-Schnittstelle an den Benutzer zurückgemeldet werden.

In diesem Zusammenhang ist es besonders vorteilhaft, wenn der Akkumulator zumindest eine Akkudatenschnittstelle zum insbesondere bidirektionalen Datenaustausch umfasst. Diese Schnittstelle ermöglicht beispielsweise eine direkte und standardisierte Kommunikation zwischen dem Akkumulator und externen Geräten. Die Akkudatenschnittstelle kann vorzugsweise als physische Verbindung, etwa in Form eines USB-Anschlusses oder einer proprietären Steckverbindung, ausgeführt sein. Sie kann ebenfalls in die Energieschnittstelle integriert sein. Eventuell können Daten über dieselben Kontakte übertragen werden, über die eine Energieversorgung von Endgeräten stattfindet.

Ergänzend oder alternativ kann die Akkudatenschnittstelle auch als drahtlose Schnittstelle ausgebildet sein. Die drahtlose Datenschnittstelle kann beispielsweise als Nahfunk- und/oder Fernfunkschnittstelle ausgebildet sein. Die drahtlose Datenschnittstelle kann hierbei beispielsweise die Fernfunktechnologien Sigfox, LoRaWAN, 5G, LTE, Satellitenkommunikation, LTE-M, DASH7, WiFi, HAPS-Mobilfunkstandard, NB-IoT und/oder WiMAX unterstützen. Denkbar ist die Nutzung aller gängigen Mobilfunkstandards, insbesondere 5G, 4G, 3G, 2G, LTE-CAT M. Auch denkbar ist die Nutzung eines eigens entwickelten proprietären Mobilfunkprotokolls. Zusätzlich oder alternativ kann die drahtlose Datenschnittstelle die Nahfunktechnologien Bluetooth, Wi-Fi, Zigbee, NFC, Z-Wave, Infrarot, Thread, Ultra-Wideband, Bluetooth Low Energy, ANT+, Wi-Fi Direct und/oder RFID unterstützen. In Verbindung mit der IoT-Steuereinheit kann die Akkudatenschnittstelle insbesondere dazu dienen, mit einem Benutzer, vorzugsweise mit Unterhaltungselektronikgeräten eines Benutzers, zu kommunizieren. Der Akkumulator kann beispielsweise über entsprechende Programme oder Applikationen auf Smartphones, Smartwatches, Tablets und/oder PCs mit dem Benutzer kommunizieren. Die Akkudatenschnittstelle kann zudem für Firmware-Updates genutzt werden, ohne den Akkumulator öffnen oder von einem Endgerät trennen zu müssen. Die Akkudatenschnittstelle kann beispielsweise mit einer Cloud kommunizieren, wobei die Kommunikation insbesondere bidirektional stattfindet. Die Ackudatenschnittstelle kann hierbei sowohl Daten von der Cloud empfangen, als auch Daten an die Cloud senden. Der Akkumulator kann insbesondere eine drahtgebundene und eine drahtlose Akkudatenschnittstelle umfassen. Der Akkumulator kann beispielsweise eine Außenschnittstelle für eine ansteckbare Außenantenne zur Verbesserung der Signalübertragung aufweisen.

Über die Akkudatenschnittstelle und insbesondere gesteuert von der IoT-Steuereinheit kann der Akkumulator zudem insbesondere mit anderen Akkumulatoren, Ladegeräten und/oder Endgeräten in der Umgebung kommunizieren. Ein Akkumulator mit niedrigem Ladestand kann einen Benutzer hierdurch beispielsweise auf einen Akkumulator mit höherem Ladestand in der Nähe oder ein nahegelegenes Ladegerät aufmerksam machen. Es können ebenfalls Betriebsparameter, Updates und Daten über die Umgebung ausgetauscht werden. Beispielsweise kann ein Akkumulator, der hohen Temperaturen oder Feuchtigkeit ausgesetzt ist, einen Benutzer durch dessen Smartphone alarmieren.

Der Akkumulator kann sich ebenfalls beispielsweise mit einem Ortungsdienst, wie ihn insbesondere große Mobiltelefonhersteller betreiben, verbinden und so bei Verlust oder Diebstahl wiedergefunden werden.

Vorteile bringt es zudem mit sich, wenn die IoT-Steuereinheit eine Programmierschnittstelle umfasst und insbesondere ausgebildet ist, die Steuerbefehle für die Steuerung und/oder Statusinformationen des Akkumulators in Abhängigkeit von der Programmierschnittstelle definierter Programme zu erzeugen. Hierdurch können insbesondere Benutzer den Akkumulator innerhalb seiner Sicherheitsparameter frei konfigurieren und Abläufe der Energieabgabe und - aufnahme festlegen. Einerseits können beispielsweise intelligente Endgeräte durch die im Akkumulator hinterlegten Programme direkt gesteuert werden. Andererseits können auch Endgeräte ohne intelligente Funktionen, wie bereits beschrieben, passiv durch im Akkumulator hinterlegte Programme gesteuert werden.

Die Programmierschnittstelle kann insbesondere eine API (Application Programming Interface) bereitstellen, über die externe Anwendungen auf bestimmte Funktionen und Daten des Akkumulators, insbesondere durch die IoT-Steuereinheit, zugreifen können. So kann ein Benutzer beispielsweise Funktionen des Akkumulators über eine Anwendung auf dem Smartphone steuern und Funktionsabläufe bzw. Programme festlegen.

Vorteilhaft ist es zudem, wenn die IoT-Steuereinheit in die Steuerung integriert ist. Hierdurch werden eventuell zusätzliche Bauteile eingespart und der Akkumulator wird kostengünstiger und kompakter. Durch die Integration werden außerdem potenzielle Fehlerquellen und Latenzzeiten minimiert. Dies ist besonders relevant für sicherheitskritische Funktionen, wie etwa eine Abschaltung bei Übertemperatur oder Überladung.

Auch ist es von Vorteil, wenn die IoT-Steuereinheit und/oder die Steuerung als integrierter Schaltkreis, insbesondere als Mikrocontroller ausgebildet ist. Mikrocontroller bieten eine kompakte und energieeffiziente Lösung für die Steuerungsaufgaben des Akkumulators. Sie vereinen beispielsweise Recheneinheit, Speicher und verschiedene Peripherieschnittstellen in einem Bauteil, was den Platzbedarf und die Komplexität der Schaltung reduziert. Die zuvor und im Folgenden beschriebenen Komponenten des Akkumulators, insbesondere die Steuerung, die IoT-Steuereinheit, die Erfassungseinheit, die Akkudatenschnittstelle und/oder die Programmierschnittstelle können als integrierte Bauteile in einem Mikrocontroller vorgesehen sein.

Außerdem ist es vorteilhaft, wenn der Akkumulator als Arbeitsgeräteakkumulator, Gartengeräteakkumulator und/oder als Werkzeuggeräteakkumulator ausgebildet ist. Arbeitsgeräte, Gartengeräte und Werkzeuggeräte können gleichermaßen von der Sicherheitsarchitektur des Akkumulators profitieren.

Als Arbeitsgeräteakkumulator kann der Akkumulator beispielsweise in tragbaren Messgeräten, Beleuchtungseinrichtungen und/oder Baustellenradios eingesetzt werden. In dieser Funktion ist er darauf ausgelegt, zuverlässig und ausdauernd Energie für intensive Arbeitseinsätze bereitzustellen.

In der Ausführung als Gartengeräteakkumulator eignet sich der Akkumulator beispielsweise für den Betrieb von Geräten wie Akku-Rasenmähern, Akku-Heckenscheren, Akku-Kettensägen und/oder Akku-Laubbläsern. Hierbei ist der Akkumulator so konzipiert, dass er den spezifischen Belastungen und Umwelteinflüssen im Außenbereich standhält.

Als Werkzeuggeräteakkumulator findet der Akkumulator insbesondere Anwendung in Elektrowerkzeugen wie Akkubohrschraubern, Akku-Winkelschleifern, verschiedenen Akku-Sägen und/oder Akku-Schlagbohrmaschinen. In dieser Ausführung ist der Akkumulator darauf ausgelegt, kurzzeitige hohe Leistungsabgaben zu ermöglichen und gleichzeitig robust genug zu sein, um den rauen Bedingungen auf Baustellen oder in Werkstätten zu widerstehen. Der Akkumulator ist insbesondere als IoT- Arbeitsgeräteakkumulator, IoT-Gartengeräteakkumulator und/oder als IoT-Werkzeuggeräteakkumulator ausgebildet.

Vorteilhaft ist es, wenn der Akkumulator als mobiler Akkumulator ausgebildet ist, wobei der Akkumulator insbesondere lösbar an einer Endgeräteschnittstelle befestigbar ist. Diese Mobilität ermöglicht es, den Akkumulator in verschiedenen Endgeräten zu verwenden und bei Bedarf auszutauschen oder separat aufzuladen.

Der Akkumulator weist hierzu insbesondere eine Befestigungsvorrichtung auf, die beispielsweise mechanische Verbindungselemente zur physischen Befestigung des Akkumulators an der Endgeräteschnittstelle umfasst. Die Befestigungsvorrichtung kann beispielsweise einen Schnappmechanismus, eine Schiebeverriegelung und/oder ein Bajonett-System umfassen.

Der erfindungsgemäße Akkumulator eignet sich für den Betrieb einer Vielzahl von Endgeräten aus verschiedenen Anwendungsbereichen. Im Bereich der Elektrowerkzeuge kann er beispielsweise Akkubohrschrauber, Akku-Winkelschleifer, verschiedene Akku-Sägen wie Kreissägen, Stichsägen und Säbelsägen, sowie Akku-Schlagbohrmaschinen und Akku-Hämmer mit Energie versorgen. Auch Gartengeräte wie Akku-Rasenmäher, Akku-Heckenscheren, Akku-Kettensägen, Akku-Laubbläser, Akku-Pumpen und Akku-Trimmer können von diesem Akkumulator profitieren. Im Bereich der Reinigungsgeräte kann er Anwendung in Akkustaubsaugern, Akku-Hochdruckreinigern und Akku-Kehrmaschinen finden. Mobilgeräte wie Laptops, Tablets und Smartphones können ebenfalls mit diesem Akkumulator betrieben werden oder der Akkumulator kann als Powerbank für diese Geräte dienen. Im Bereich der elektrischen Fortbewegungsmittel eignet er sich für E-Bikes, E-Scooter, Elektroroller und elektrische Skateboards. Haushaltsgeräte wie Staubsaugerroboter, tragbare Kühlboxen und akkubetriebene Ventilatoren können ebenso von diesem Akkumulator profitieren. Für Outdoor- und Freizeitaktivitäten kann er beispielsweise Campinglampen und elektrische Kühlboxen mit Energie versorgen. Auch kann der Akkumulator beispielsweise für Überwachungskameras, tragbare Alarmsysteme und Notbeleuchtungssysteme verwendet werden.

Das erfindungsgemäße Verfahren eignet sich zum Betreiben eines Akkumulators, insbesondere eines IoT-Akkumulators. Der Akkumulator kann beispielsweise gemäß der vorangegangenen Beschreibung ausgebildet sein, wobei die genannten Merkmale einzeln oder in beliebiger Kombination verwirklicht sein können. Für das Verfahren wird vorgeschlagen, dass Steuerbefehle für eine Steuerung des Akkumulators und/oder Statusinformationen des Akkumulators von einer IoT-Steuereinheit erzeugt werden. Die bereits beschriebenen Vorteile des erfindungsgemäßen Akkumulators werden auch durch das erfindungsgemäße Verfahren verwirklicht, womit die Aufgabe, die sich die Erfindung stellt, auch von diesem Verfahren gelöst wird.

Insbesondere wird, wie bereits beschrieben, eine umfassende Benutzerinteraktion ermöglicht, wodurch die Kontrolle und Überwachung des Akkumulators und eventuell des angeschlossenen Endgeräts oder Ladegeräts signifikant erweitert wird.

Vorteilhaft ist es zudem, wenn die Steuerbefehle für die Steuerung und/oder die Statusinformationen des Akkumulators von der IoT-Steuereinheit in Abhängigkeit von erfassten Akkumulatorparametern erzeugt werden. Dies ermöglicht insbesondere eine kontextsensitive Steuerung des Akkumulators und eventuell eine passive Charakterisierung eines angeschlossenen Endgeräts. Es wird wie oben beschrieben eine passive Steuerung des Endgeräts ermöglicht, insbesondere, ohne dass dem Akkumulator vom Endgerät Daten zur Verfügung gestellt werden.

Vorteile bringt es zudem mit sich, wenn die Akkumulatorparameter und/oder die Statusinformationen eine Anzahl von Ein- und/oder Ausschaltvorgängen, eine Anzahl und/oder Art von Energieübertragungsvorgängen, einen Ladestand der wenigstens einen Akkumulatorzelle und/oder eine Temperatur des Akkumulators umfassen. Diese Parameter sind wie beschrieben besonders wichtig, um den Akkumulator selbst und ein angeschlossenes Endgerät oder Ladegerät zu charakterisieren und basierend hierauf Steuerbefehle zu erstellen.

Besonders vorteilhaft ist es, wenn die durch die IoT-Steuereinheit erzeugten Steuerbefehle einen Zeitpunkt einer Energieübertragung, einen Zeitraum einer Energieübertragung, ein Intervall einer Energieübertragung, einen Betrag einer übertragenen Spannung und/oder einen Betrag einer übertragenen Stromstärke betreffen. Wie in den bereits beschriebenen Beispielen einer Lampen- oder Pumpensteuerung können hierdurch auch bei Endgeräten ohne Kommunikationsfähigkeiten erweiterte und teils automatisierte Funktionen realisiert werden.

Vorteilhaft ist es zudem, wenn die IoT-Steuereinheit Daten von externen Geräten empfängt und/oder Daten an externe Geräte versendet. Einerseits kann die IoT-Steuereinheit hierdurch mit einem Benutzer des Akkumulators kommunizieren und insbesondere Vorgaben für Steuerbefehle vom Benutzer empfangen. Andererseits kann die IoT-Steuereinheit wie beschrieben mit anderen Geräten interagieren. Die IoT-Steuereinheit kann beispielsweise mit einer Cloud kommunizieren, wobei die Kommunikation insbesondere bidirektional stattfindet. Die IoT-Steuereinheit kann hierbei sowohl Daten von der Cloud empfangen als auch Daten an die Cloud senden.

Des Weiteren ist es vorteilhaft, wenn die Steuerbefehle für die Steuerung und/oder Statusinformationen des Akkumulators in Abhängigkeit von vordefinierten Programmen erzeugt werden. Hierdurch kann der Akkumulator wie beschrieben zur Steuerung vordefinierter komplexer Abläufe verwendet werden.

Weitere Vorteile der Erfindung sind in den nachfolgenden Ausführungsbeispielen beschrieben. Es zeigen, jeweils schematisch:
- **Figur 1**: eine isometrische Ansicht eines ersten Ausführungsbeispiels eines erfindungsgemäßen Akkumulators,
- **Figur 2**: eine geschnittene Seitenansicht des ersten Ausführungsbeispiels des erfindungsgemäßen Akkumulators,
- **Figur 3**: eine geschnittene Seitenansicht eines zweiten Ausführungsbeispiels des erfindungsgemäßen Akkumulators, und
- **Figur 4**: eine geschnittene Seitenansicht eines dritten Ausführungsbeispiels des erfindungsgemäßen Akkumulators.

Bei der nachfolgenden Beschreibung der Figuren werden für in den verschiedenen Figuren jeweils identische und/oder zumindest vergleichbare Merkmale gleiche Bezugszeichen verwendet. Die einzelnen Merkmale, deren Ausgestaltung und/oder Wirkweise werden meist nur bei ihrer ersten Erwähnung ausführlich erläutert. Werden einzelne Merkmale nicht nochmals detailliert erläutert, so entspricht deren Ausgestaltung und/oder Wirkweise der Ausgestaltung und Wirkweise der bereits beschriebenen gleichwirkenden oder gleichnamigen Merkmale.

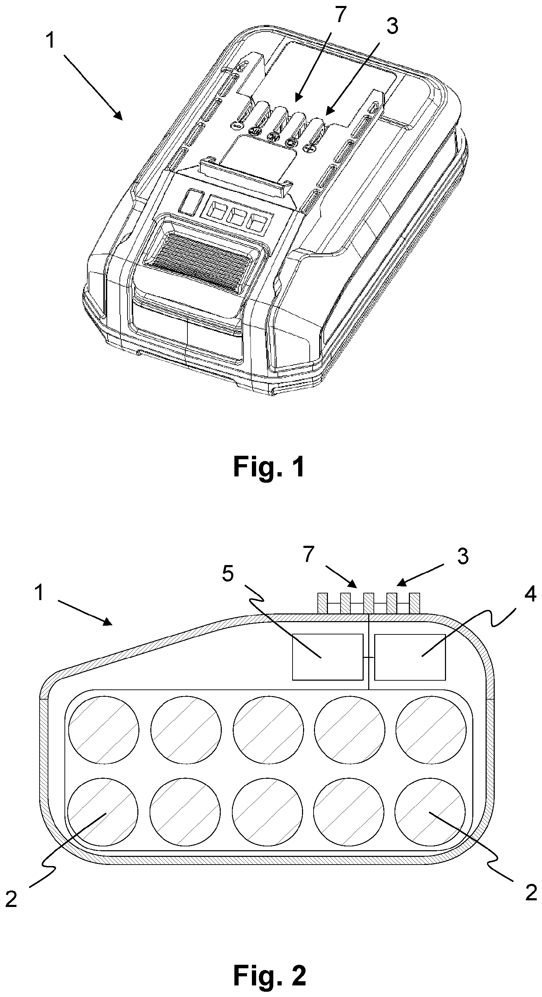

Figur 1 und Figur 2 zeigen ein erstes Ausführungsbeispiel eines erfindungsgemäßen Akkumulators 1 in unterschiedlichen Ansichten.

Figur 1 stellt eine isometrische Ansicht des Akkumulators 1 dar. Der Akkumulator 1 weist eine kompakte, rechteckige Gehäuseform auf, wie sie typischerweise bei Elektrowerkzeugen Verwendung findet. An der Oberseite des Akkumulators 1 ist eine Energieschnittstelle 3 vorgesehen, die zur Verbindung mit einem Endgerät oder einer externen Energiequelle dient. Die Energieschnittstelle 3 umfasst beispielsweise mehrere elektrische Kontakte, über die elektrische Energie in Form einer Spannung und einer Stromstärke übertragen werden kann.

Figur 2 zeigt eine geschnittene Seitenansicht des Akkumulators 1, die den inneren Aufbau verdeutlicht. Im Inneren des Akkumulators 1 befinden sich mehrere Akkumulatorzellen 2. Diese Akkumulatorzellen 2 sind für die Aufnahme, Speicherung und Abgabe von Energie verantwortlich und bilden das Kernstück des Akkumulators 1. Die Verwendung mehrerer Akkumulatorzellen 2 ermöglicht eine hohe Energiedichte und Leistungsfähigkeit, wodurch der Akkumulator 1 für eine Vielzahl von Anwendungen, von kleineren Elektrowerkzeugen bis hin zu leistungsstärkeren Geräten wie Rasenmähern, geeignet ist.

Eine wesentliche Komponente des Akkumulators 1 ist die Steuerung 4. Die Steuerung 4 ist insbesondere für die Überwachung und Regelung der Energieflüsse innerhalb des Akkumulators 1 zuständig. Zusätzlich umfasst der Akkumulator 1 eine IoT-Steuereinheit 5. Die IoT-Steuereinheit 5 ist beispielsweise verantwortlich für die Erzeugung von Steuerbefehlen für die Steuerung 4 und/oder Statusinformationen des Akkumulators 1, wodurch erweiterte Funktionen und eine verbesserte Benutzerinteraktion ermöglicht werden.

Der Akkumulator 1 kann außerdem eine Akkudatenschnittstelle 7 umfassen, die in diesem Ausführungsbeispiel als physische Schnittstelle ausgebildet ist und insbesondere in die Energieschnittstelle 3 integriert ist. Die Akkudatenschnittstelle 7 ermöglicht insbesondere den Datenaustausch zwischen dem Akkumulator 1 und externen Geräten.

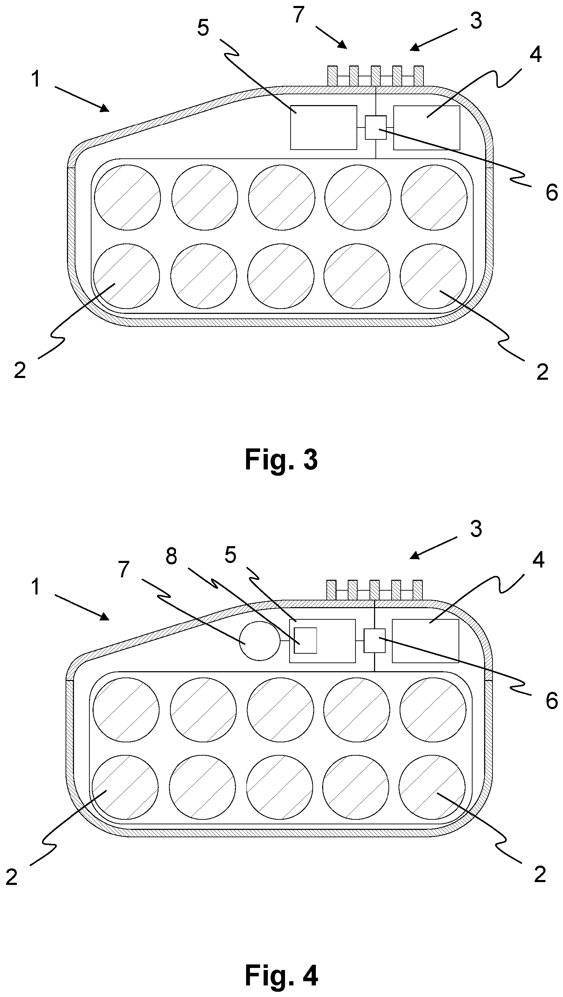

Figur 3 zeigt eine geschnittene Seitenansicht eines zweiten Ausführungsbeispiels des erfindungsgemäßen Akkumulators 1. Dieses Ausführungsbeispiel weist im Wesentlichen die gleichen Komponenten wie das erste Ausführungsbeispiel auf. Im Unterschied zum ersten Ausführungsbeispiel umfasst der Akkumulator 1 des zweiten Ausführungsbeispiels eine Erfassungseinheit 6.

Die Erfassungseinheit 6 dient zur Erfassung von Akkumulatorparametern, zu denen beispielsweise die Anzahl von Ein- und Ausschaltvorgängen, die Anzahl und Art von Energieübertragungsvorgängen, der aktuelle Ladestand der Akkumulatorzellen 2 sowie die Temperatur des Akkumulators 1 zählen.

Die Erfassungseinheit 6 kann verschiedene nicht explizit dargestellte Sensoren umfassen, wie beispielsweise Spannungssensoren zur Überwachung der Zellspannung und der übertragenen Spannung, Stromsensoren zur Erfassung von Lade- und Entladeströmen sowie Temperatursensoren. Zusätzlich können Sensoren zur Messung des internen Widerstands oder des Widerstands an der Energieschnittstelle 3 integriert sein.

Die von der Erfassungseinheit 6 gesammelten Daten bilden beispielsweise die Grundlage für die interaktive Steuerung und Rückmeldung von Statusinformationen des Akkumulators 1 an einen Benutzer durch die IoT-Steuereinheit 5. Insbesondere verarbeitet die IoT-Steuereinheit 5 die von der Erfassungseinheit 6 gelieferten Daten und nutzt sie, um Steuerbefehle für die Steuerung 4 und/oder Statusinformationen zu erzeugen.

Insbesondere durch eine Analyse von Energieübertragungsvorgängen kann der Akkumulator 1 eine passive Charakterisierung angeschlossener Endgeräte vornehmen. Dies erlaubt Rückschlüsse auf die Art und den Zustand des angeschlossenen Endgeräts, ohne dass dieses über eigene Kommunikationsfähigkeiten verfügen muss. Basierend auf den erfassten Daten kann die IoT-Steuereinheit 5 zudem beispielsweise adaptive Ladestrategien entwickeln. So kann beispielsweise bei häufigen längeren Ladevorgängen, etwa über Nacht, die Ladeleistung angepasst werden, um die Lebensdauer der Akkumulatorzellen 2 zu verlängern. Zudem können die erfassten Akkuparameter für Sicherheitsfunktionen des Akkumulators 1 verwendet werden. So kann die IoT-Steuereinheit 5 und/oder die Steuerung 4 automatisch Schutzmaßnahmen einleiten, wenn sich Akkuparameter außerhalb vorgegebener Grenzwerte befinden.

Die IoT-Steuereinheit 5 kann die verarbeiteten Daten und Statusinformationen über die Akkudatenschnittstelle 7 an externe Geräte übermitteln. Dies ermöglicht es Benutzern, detaillierte Einblicke in den Zustand und die Leistung des Akkumulators 1 zu erhalten.

Figur 4 zeigt eine geschnittene Seitenansicht eines dritten Ausführungsbeispiels des erfindungsgemäßen Akkumulators 1. In diesem Ausführungsbeispiel ist die Akkudatenschnittstelle 7 als drahtlose Schnittstelle ausgeführt.

Die drahtlose Ausführung der Akkudatenschnittstelle 7 ermöglicht eine erweiterte Konnektivität des Akkumulators 1, insbesondere mit Geräten seiner Umgebung. Die Akkudatenschnittstelle 7 kann verschiedene drahtlose Kommunikationstechnologien nutzen, wie beispielsweise Mobilfunk, WLAN, Bluetooth, Zigbee und/oder LoRaWAN. Über die Akkudatenschnittstelle 7 kann ein Benutzer beispielsweise über ein Unterhaltungselektronikgerät, wie Smartphone, Tablet oder PC, direkt und ohne physische Verbindung auf Statusinformationen des Akkumulators 1 zugreifen und Einstellungen vornehmen bzw. Funktionen des Akkumulators 1 durch die IoT-Steuereinheit 5 steuern.

Insbesondere die drahtlose Kommunikation eröffnet Möglichkeiten für die Vernetzung des Akkumulators 1 mit anderen Geräten im Rahmen des Internet der Dinge. Der Akkumulator 1 kann beispielsweise drahtlos mit anderen Akkumulatoren 1, Ladegeräten oder Endgeräten in der Umgebung kommunizieren.

Ein weiterer Vorteil der drahtlosen Akkudatenschnittstelle 7 ist die Möglichkeit zur Durchführung von drahtlosen Firmware-Updates (Over-the-Air, OTA). Dies ermöglicht es, den Akkumulator 1 mit neuen Funktionen auszustatten oder Sicherheitsupdates durchzuführen, ohne dass eine physische Verbindung oder ein Öffnen des Akkumulators 1 erforderlich ist.

In diesem Ausführungsbeispiel umfasst die IoT-Steuereinheit 5 außerdem eine Programmierschnittstelle 8. Insbesondere bietet die Programmierschnittstelle 8 Benutzern die Möglichkeit, den Akkumulator 1 innerhalb seiner Sicherheitsparameter frei zu konfigurieren und komplexe Abläufe der Energieabgabe und -aufnahme festzulegen. Die Programmierschnittstelle 8 kann als ein API (Application Programming Interface) ausgeführt sein oder ein API umfassen, über das externe Anwendungen auf bestimmte Funktionen und Daten des Akkumulators 1 zugreifen und diese steuern können. Durch die Programmierschnittstelle 8 können der IoT-Steuereinheit 5 des Akkumulators 1 beispielsweise vordefinierte Programme zugeführt werden, was die Automatisierung komplexer Abläufe ermöglicht. Dies ist besonders nützlich in Anwendungen, die eine zeitgesteuerte oder ereignisbasierte Energieversorgung erfordern, wie etwa bei Bewässerungssystemen.

### Bezugszeichenliste

- 1: Akkumulator
- 2: Akkumulatorzelle
- 3: Energieschnittstelle
- 4: Steuerung
- 5: IoT-Steuereinheit
- 6: Erfassungseinheit
- 7: Akkudatenschnittstelle
- 8: Programmierschnittstelle

## Patentansprüche

1. Akkumulator (1), insbesondere IoT-Akkumulator mit wenigstens einer Akkumulatorzelle (2) zur Aufnahme, Speicherung und Abgabe von Energie,
einer Energieschnittstelle (3) zur Verbindung des Akkumulators (1) mit einem Endgerät und/oder einer externen Energiequelle, und
einer Steuerung (4) zum Steuern der wenigstens einen Akkumulatorzelle (2) und/oder der Energieschnittstelle (3)
**dadurch gekennzeichnet, dass**
der Akkumulator (1) eine IoT-Steuereinheit (5) umfasst, wobei die IoT-Steuereinheit (5) ausgebildet ist, Steuerbefehle für die Steuerung (4) und/oder Statusinformationen des Akkumulators (1) zu erzeugen.

2. Akkumulator (1) nach dem vorherigen Anspruch, **dadurch gekennzeichnet, dass** der Akkumulator (1) eine Erfassungseinheit (6) zum Erfassen von Akkumulatorparametern umfasst.

3. Akkumulator (1) nach dem vorherigen Anspruch, **dadurch gekennzeichnet, dass** die IoT-Steuereinheit (5) mit der Erfassungseinheit (6) verbunden und ausgebildet ist, die Steuerbefehle für die Steuerung (4) und/oder Statusinformationen des Akkumulators (1) in Abhängigkeit zumindest eines Akkumulatorparameters zu erzeugen.

4. Akkumulator (1) nach einem der vorherigen Ansprüche, **dadurch gekennzeichnet, dass** die Akkumulatorparameter und/oder die Statusinformationen eine Anzahl von Ein- und/oder Ausschaltvorgängen, eine Anzahl und/oder Art von Energieübertragungsvorgängen, einen Ladestand der wenigstens einen Akkumulatorzelle und/oder eine Temperatur des Akkumulators (1) umfassen.

5. Akkumulator (1) nach einem der vorherigen Ansprüche, **dadurch gekennzeichnet, dass** die durch die IoT-Steuereinheit (5) erzeugbaren Steuerbefehle einen Zeitpunkt einer Energieübertragung, einen Zeitraum einer Energieübertragung, ein Intervall einer Energieübertragung, einen Betrag einer übertragenen Spannung und/oder einen Betrag einer übertragenen Stromstärke betreffen.

6. Akkumulator (1) nach einem der vorherigen Ansprüche, **dadurch gekennzeichnet, dass** der Akkumulator (1) zumindest eine Akkudatenschnittstelle (7) zum insbesondere bidirektionalen Datenaustausch umfasst.

7. Akkumulator (1) nach einem der vorherigen Ansprüche, **dadurch gekennzeichnet, dass** die IoT-Steuereinheit (5) eine Programmierschnittstelle (8) umfasst und insbesondere ausgebildet ist, die Steuerbefehle für die Steuerung (4) und/oder Statusinformationen des Akkumulators (1) in Abhängigkeit von der Programmierschnittstelle (8) definierter Programme zu erzeugen.

8. Akkumulator (1) nach einem der vorherigen Ansprüche, **dadurch gekennzeichnet, dass** die IoT-Steuereinheit (5) in die Steuerung (4) integriert ist.

9. Akkumulator (1) nach einem der vorherigen Ansprüche, **dadurch gekennzeichnet, dass** die IoT-Steuereinheit (5) und/oder die Steuerung (4) als integrierter Schaltkreis, insbesondere als Mikrocontroller ausgebildet ist.

10. Verfahren zum Betreiben eines Akkumulators (1) insbesondere eines IoT-Akkumulators, der insbesondere gemäß einem oder mehreren der vorherigen Ansprüche ausgebildet ist, **dadurch gekennzeichnet, dass** Steuerbefehle für eine Steuerung (4) des Akkumulators (1) und/oder Statusinformationen des Akkumulators (1) von einer IoT-Steuereinheit (5) erzeugt werden.

11. Verfahren nach dem vorherigen Anspruch, **dadurch gekennzeichnet, dass** die Steuerbefehle für die Steuerung (4) und/oder die Statusinformationen des Akkumulators (1) von der IoT-Steuereinheit (5) in Abhängigkeit von erfassten Akkumulatorparametern erzeugt werden.

12. Verfahren nach einem der vorherigen Ansprüche, **dadurch gekennzeichnet, dass** die Akkumulatorparameter und/oder die Statusinformationen eine Anzahl von Ein- und/oder Ausschaltvorgängen, eine Anzahl und/oder Art von Energieübertragungsvorgängen, einen Ladestand der wenigstens einen Akkumulatorzelle und/oder eine Temperatur des Akkumulators (1) umfassen.

13. Verfahren nach einem der vorherigen Ansprüche, **dadurch gekennzeichnet, dass** die durch die IoT-Steuereinheit (5) erzeugten Steuerbefehle einen Zeitpunkt einer Energieübertragung, einen Zeitraum einer Energieübertragung, ein Intervall einer Energieübertragung, einen Betrag einer übertragenen Spannung und/oder einen Betrag einer übertragenen Stromstärke betreffen.

14. Verfahren nach einem der vorherigen Ansprüche, **dadurch gekennzeichnet, dass** die IoT-Steuereinheit (5) Daten von externen Geräten empfängt und/oder Daten an externe Geräte versendet.

15. Verfahren nach einem der vorherigen Ansprüche, **dadurch gekennzeichnet, dass** die Steuerbefehle für die Steuerung (4) und/oder Statusinformationen des Akkumulators (1) in Abhängigkeit von vordefinierten Programmen erzeugt werden.
